# EUROPÄISCHE PATENTSCHRIFT

(11) **EP 4 074 479 B1**
(45) Veröffentlichungstag und Bekanntmachung des Hinweises auf die Patenterteilung: **19.02.2025**
(21) Anmeldenummer: 22167834.5
(22) Anmeldetag: 12.04.2022
(51) Int. Cl.: B27C 9/02, B23Q 39/02, B23Q 39/00

(54) **BEARBEITUNGSAGGREGAT UND BEARBEITUNGSEINRICHTUNG**
MACHINING UNIT AND MACHINING DEVICE
GROUPE D'USINAGE ET DISPOSITIF D'USINAGE

(30) Priorität: 14.04.2021 DE 102021109344
(43) Veröffentlichungstag der Anmeldung: 19.10.2022
(73) Patentinhaber: HOMAG GmbH, 72296 Schopfloch (DE)
(72) Erfinder: Rempp, Friedhelm, 78073 Bad Dürrheim (DE); Matt, Marco, 72250 Wittlensweiler (DE); Calmbach, Martin, 72293 Glatten (DE)
(74) Vertreter: Hoffmann Eitle

(56) Entgegenhaltungen:
- EP-A2- 2 868 431
- EP-B1- 0 743 139
- EP-B1- 1 307 314
- DE-A1- 3 914 008
- DE-C2- 19 637 177
- US-A1- 2012 189 394

## Beschreibung

### Technisches Gebiet

Die Erfindung betrifft ein Bearbeitungsaggregat für eine Bearbeitungseinrichtung sowie eine Bearbeitungseinrichtung zum Bearbeiten von Werkstücken.

### Stand der Technik

Aus dem Stand der Technik sind Bearbeitungsaggregate mit einem sogenannten Revolvermechanismus bekannt, die mehrere Bearbeitungswerkzeuge aufnehmen können. Bearbeitungsaggregate mit einem solchen Revolvermechanismus weisen üblicher Weise nur einen Bearbeitungsausgang in einer definierten Richtung auf, sodass zum Ausführen eines Bearbeitungsvorgangs mit einem bestimmten Bearbeitungswerkzeugs, das entsprechende Bearbeitungswerkzeug selektiv in die Position des Bearbeitungsausgangs bewegt werden muss. Ein solches Bearbeitungsaggregat weist eine aufwändige Mechanik auf und ist vergleichsweise kostenintensiv.

Ein Bearbeitungsaggregat nach dem Oberbegriff des Anspruchs 1 ist in der EP 2 868 431 A2 offenbart.

### Darstellung der Erfindung

Der Erfindung liegt die Aufgabe zugrunde, ein Bearbeitungsaggregat vorzuschlagen, welches einen einfachen Aufbau aufweist und eine flexible Bearbeitung von Werkstücken ermöglicht.

Ein Bearbeitungsaggregat ist in Anspruch 1 definiert. Eine Bearbeitungseinrichtung ist in Anspruch 5 definiert.

Unteransprüche beziehen sich auf bestimmte Ausführungsformen. Die Aufgabe wird durch ein Bearbeitungsaggregat für eine Bearbeitungseinrichtung, insbesondere eine Holzbearbeitungseinrichtung, aufweisend einen Aggregatkörper mit mehreren Werkzeugaufnahmen, die jeweils ein Bearbeitungswerkzeug zum Ausführen eines Bearbeitungsvorgangs an einem Werkstück aufnehmen, sowie eine Anschlusseinrichtung, durch die der Aggregatkörper an einer Antriebseinrichtung oder einen korrespondierenden Anschluss der Bearbeitungseinrichtung anordenbar ist, gelöst, wobei zumindest drei Werkzeugaufnahmen vorgesehen sind, deren jeweiligen Längsmittelachsen nicht parallel zueinander ausgerichtet sind, wobei wenigstens eine der Werkzeugaufnahmen mit der Längsmittelachse in einem Winkel von größer +/-0° und kleiner +/-90° zu einer Mittelachse der Anschlusseinrichtung oder einer Schwenkachse des Aggregatkörpers ausgerichtet ist und durch jede Werkzeugaufnahme ein Bearbeitungsausgang in die jeweilige Raumrichtung gebildet ist.

Auf diese Weise kann ein sehr kompaktes Bearbeitungsaggregat ausgebildet sein, welches eine variable Bearbeitung von Werkstücken in verschiedenen Raumrichtungen ermöglicht. Indem die zumindest drei Werkzeugaufnahmen in der Weise zueinander angeordnet sind, dass deren Längsmittelachsen nicht parallel zueinander verlaufen, kann eine Bearbeitung von Werkstücken in verschiedenen Raumrichtungen ermöglicht sein. Hierbei können die jeweiligen Werkzeugaufnahmen Bearbeitungswerkzeuge mit unterschiedlichen Werkzeugparametern oder verschiedene Bearbeitungswerkzeuge, beispielsweise Bohrwerkzeuge, Fräswerkzeuge und/oder Sägewerkzeuge oder auch eine Messeinrichtung und/oder eine Abblasdüse oder dergleichen, aufnehmen. Dadurch können in Abhängigkeit von der Positionierung des Bearbeitungsaggregats zum Werkstück unterschiedliche Bearbeitungsvorgänge flexibel ausführbar sein.

Hierzu kann das Bearbeitungsaggregat an einer Stelleinrichtung der Bearbeitungseinrichtung angeordnet sein, durch die eine Stellbewegung, vorzugsweise eine fünfachsige Stellbewegung, d.h. eine translatorische Stellbewegung entlang der X-Y-Z-Achsen sowie eine rotatorische Stellbewegung um weitere Achsen A und C, ansteuerbar ist. Das Bearbeitungsaggregat weist einen Schwenkmechanismus auf, durch welchen eine Schwenkbewegung der Bearbeitungswerkzeuge zur Anschlusseinrichtung ansteuerbar ist. Auf diese Weise kann in Verbindung mit der Stelleinrichtung eine sechsachsige Stellbewegung, d.h. eine zusätzliche rotatorische Stellbewegung um eine weitere Achse, der Bearbeitungswerkzeuge ansteuerbar sein.

Weitere Ausgestaltungen des Bearbeitungsaggregats sind in den Unteransprüchen definiert.

Zudem wird die Aufgabe durch eine Bearbeitungseinrichtung zum Bearbeiten von Werkstücken, insbesondere Werkstücke, die zumindest teilweise aus Holz, einem Holzwerkstoff, Kunststoff, Verbundwerkstoff oder dergleichen ausgebildet sind, mit einer Werkstückauflage zum Aufnehmen wenigstens eines zu bearbeitenden Werkstücks sowie mit wenigstens einem Bearbeitungsaggregat zum Ausführen eines Bearbeitungsvorgangs an einem zu bearbeitenden Werkstück, das relativ zum Werkstück bewegbar angeordnet ist, gelöst, wobei das Bearbeitungsaggregat gemäß einer der zuvor beschriebenen Ausführungsformen ausgebildet ist.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer Ausführungsform einer offenbarungsgemäßen Bearbeitungseinrichtung;
- Fig. 2: eine perspektivische Ansicht einer Ausführungsform eines offenbarungsgemäßen Bearbeitungsaggregats;
- Fig. 3: das Bearbeitungsaggregat gemäß Figur 2 bei einem ersten vertikalen Bearbeitungsvorgang;
- Fig. 4: das Bearbeitungsaggregat bei einem zweiten vertikalen Bearbeitungsvorgang;
- Fig. 5: das Bearbeitungsaggregat bei einem dritten vertikalen Bearbeitungsvorgang;
- Fig. 6: das Bearbeitungsaggregat bei einem horizontalen Bearbeitungsvorgang in einer Seitenansicht;
- Fig. 7: das Bearbeitungsaggregat bei dem horizontalen Bearbeitungsvorgang in Figur 6 in einer Ansicht von oben;
- Fig. 8: das Bearbeitungsaggregat bei einem schrägen Bearbeitungsvorgang;
- Fig. 9: das Bearbeitungsaggregat mit einem Sägewerkzeug bei einem ersten Sägevorgang;
- Fig. 10: das Bearbeitungsaggregat in Figur 9 bei einem zweiten Sägevorgang.

### Beschreibung von Ausführungsformen

Gleiche Bezugszeichen, die in verschiedenen Figuren aufgeführt sind, benennen identische, einander entsprechende, oder funktionell ähnliche Elemente.

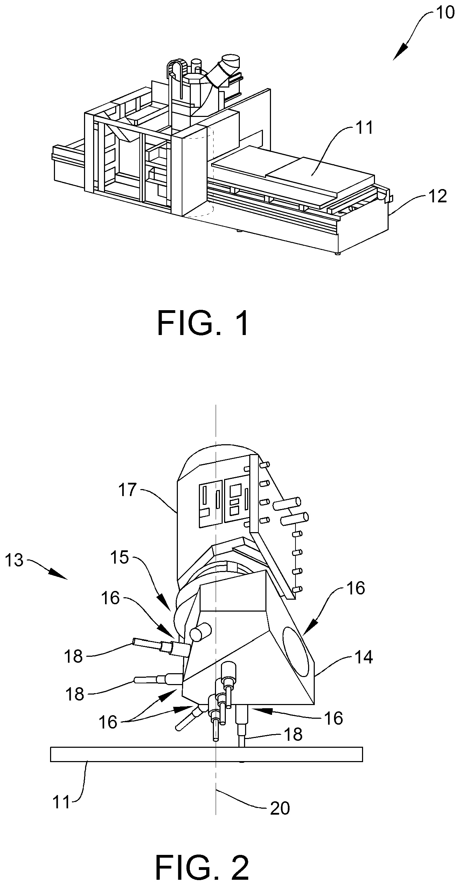

Figur 1 zeigt eine Ausführungsform einer Bearbeitungseinrichtung 10 zum Bearbeiten von Werkstücken 11, die vorzugsweise als eine Holzbearbeitungseinrichtung ausgebildet ist. Die Bearbeitungseinrichtung 10 ist vorzugsweise als eine stationäre Bearbeitungseinrichtung ausgebildet. Bei dieser wird das zu bearbeitende Werkstück 11 manuell oder maschinell auf einer Werkstückauflage 12 positioniert. Die Bearbeitungseinrichtung 10 ist bevorzugt als eine CNC-gesteuerte Bearbeitungseinrichtung oder als ein CNC-gesteuertes Bearbeitungszentrum ausgebildet.

Bei den zu bearbeitenden Werkstücken 11 handelt es sich insbesondere um solche, die zumindest teilweise aus Holz, Holzwerkstoffen, Kunststoff, Verbundwerkstoffen oder dergleichen ausgebildet sind. Solche Werkstücke kommen beispielsweise im Bereich der Möbel- und Bauelementefertigung zum Einsatz. Dabei kann es sich um unterschiedlichste Werkstücke handeln, beispielsweise Massivholz- oder Spanplatten, Leichtbauplatten, Sandwichplatten oder ähnliche. Die vorliegende Erfindung ist jedoch nicht auf derartige Werkstücke beschränkt.

Zum Bearbeiten eines Werkstücks 11 umfasst die Bearbeitungseinrichtung 10 wenigstens ein Bearbeitungsaggregat 13, das in Figur 2 gemäß einer exemplarischen Ausführungsform dargestellt ist. Zum Positionieren des Bearbeitungsaggregats 13 zu dem zu bearbeitenden Werkstück 11, ist dieses an einer nicht näher dargestellten Stelleinrichtung angeordnet. Durch die Stelleinrichtung kann eine fünfachsige Stellbewegung des Bearbeitungsaggregats 13, d.h. eine Stellbewegung mit fünf Freiheitsgraden, angesteuert werden. Die fünfachsige Stellbewegung ist durch eine translatorische Stellbewegung entlang der X-Y-Z-Achsen und eine rotatorische Stellbewegung um die A-Achse und die C-Achse gebildet.

Das Bearbeitungsaggregat 13 weist einen Aggregatkörper 14 auf, an dem eine Anschlusseinrichtung 15 sowie mehrere Werkzeugaufnahmen 16 vorgesehen sind. Durch die Anschlusseinrichtung 15 kann das Bearbeitungsaggregat 13 an einen korrespondierenden Anschluss einer Antriebseinrichtung 17, wie in Figur 2 gezeigt, angebracht sein. Durch die Antriebseinrichtung 17 ist ein Antrieb der Bearbeitungswerkzeuge 18 des Bearbeitungsaggregats 13 oder einer später beschriebenen Schwenkbewegung des Bearbeitungsaggregats 13 vorgesehen. Die Antriebseinrichtung 17 kann einen Elektromotor oder einen pneumatischen Antrieb aufweisen. Die Antriebseinrichtung 17 ist insbesondere als ein Spindelantrieb, beispielsweise eine Bohrspindel oder Frässpindel, ausgebildet. Die Antriebseinrichtung 17 kann wiederum einen Anschluss aufweisen, der beispielsweise an der Stelleinrichtung der Bearbeitungseinrichtung 10 angebracht werden kann. Alternativ kann das Bearbeitungsaggregat 13 durch die Anschlusseinrichtung 15 auch unmittelbar an einen korrespondierenden Anschluss der Bearbeitungseinrichtung 10 anbringbar sein.

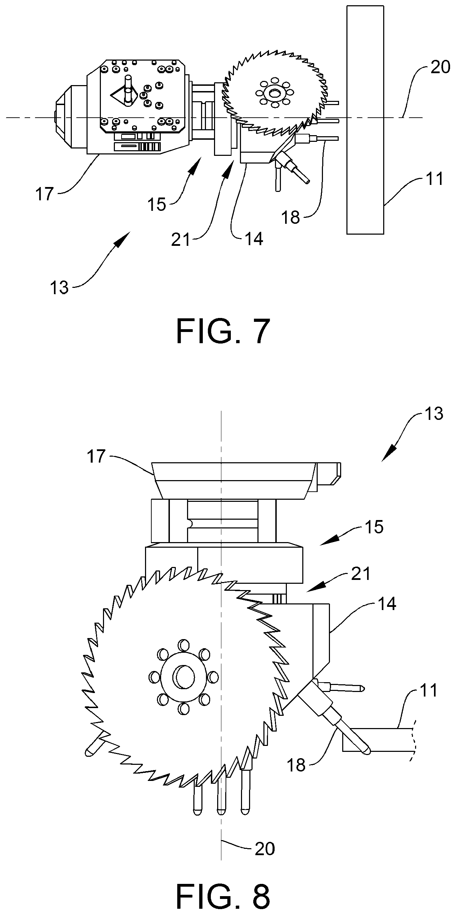

Die Bearbeitungswerkzeuge 18 sind jeweils in den Werkzeugaufnahmen 16 aufgenommen. Die Werkzeugaufnahmen 16 sind am Aggregatkörper 14 ortsfest zum Aggregatkörper 14 angeordnet. Die Werkzeugaufnahmen 16 können verschiedenartig ausgebildet sein, um gleichzeitig mehrere gleichartige und/oder unterschiedliche Bearbeitungswerkzeuge 18 aufzunehmen. Bei den Bearbeitungswerkzeugen 18 kann es sich beispielsweise um Bohrwerkzeuge, wie in Figur 2 gezeigt, um Sägewerkzeuge, wie in den Figuren 8 bis 10 gezeigt, und/oder um Fräswerkzeuge handeln. Ebenso kann eine Werkzeugaufnahme 16 oder mehrere Werkzeugaufnahmen 16 ausgebildet sein, um eine nicht näher dargestellte Messeinrichtung und/oder eine Abblasdüse aufzunehmen. In dem Aggregatkörper 14 ist eine Kraft- bzw. Drehmomentübertragungseinrichtung vorgesehen, durch die ein über die Anschlusseinrichtung 15 eingebrachtes Drehmoment an die in den Werkzeugaufnahmen 16 aufgenommenen Bearbeitungswerkzeuge 18 übertragen wird.

Der Aggregatkörper 14 ist als ein vielflächiger Körper mit mehreren Außenflächen ausgebildet. Der Aggregatkörper 14 ist als ein Polyeder oder ein facettenförmiger Körper ausgebildet. Gemäß der in den Figuren 2 bis 10 dargestellten Ausführungsform des Bearbeitungsaggregats 13 weist der Aggregatkörper 14 sieben Außenflächen auf, an denen jeweils zumindest eine Werkzeugaufnahme 16 vorgesehen ist. Die Außenflächen sind in der Weise zueinander angeordnet, dass die Orthogonalen dieser Außenflächen jeweils in einem abweichenden Winkel zueinander ausgerichtet sind. Insbesondere sind zumindest drei Außenflächen des Aggregatkörpers in der Weise zueinander angeordnet, dass deren Orthogonalen jeweils nicht parallel zueinander verlaufen. Die aneinandergrenzenden Außenflächen des Aggregatkörpers 14 sind zumindest teilweise stumpfwinklig zueinander ausgerichtet. Die aneinandergrenzenden Außenflächen des Aggregatkörpers 14 können auch zumindest teilweise schiefwinklig zueinander ausgerichtet sein.

In der Ausführungsform des Aggregatkörpers 14 gemäß Figur 2 ist eine Außenfläche gebildet, die rechtwinklig zu einer Längsachse 20 des Aggregatkörpers 14 ausgerichtet ist und an der drei Werkzeugaufnahmen 16 vorgesehen sind, die jeweils ein Bearbeitungswerkzeug 18 (Bohrwerkzeug) axial zur Längsachse 20 des Aggregatkörpers 14 aufnehmen. Die Längsachse 20 des Aggregatkörpers 14 kann axial zu einer Mittelachse der Anschlusseinrichtung 15 ausgerichtet sein oder mit der Mittelachse der Anschlusseinrichtung 15 zusammenfallen. Diese Werkzeugaufnahmen 16 können in einer Reihe nebeneinanderliegend angeordnet sein, um in einem simultanen Bearbeitungsvorgang eine Lochreihe in das Werkstück 11 einzubringen. Ebenso können auch zwei oder mehr als drei Werkzeugaufnahmen 16 in einer Reihe oder einem Raster vorgesehen sein.

Zudem sind zwei weitere Werkzeugaufnahmen 16 vorgesehen, die jeweils ein Bearbeitungswerkzeug 18 in einem rechten Winkel zur Längsachse 20 des Aggregatkörpers 14 aufnehmen, wobei die Werkzeugaufnahmen 16 in der Weise zueinander angeordnet sind, dass die jeweiligen Bearbeitungswerkzeuge 18 in unterschiedliche Raumrichtungen weisend ausgerichtet sind.

Ergänzend sind drei Werkzeugaufnahmen 16 an dem Aggregatkörper 14 vorgesehen, die im Vergleich zu den axial und im rechten Winkel zur Längsachse 20 des Aggregatkörpers 14 ausgerichteten Werkzeugaufnahmen 16 in einem dazu abweichenden Winkel zur Längsachse 20 des Aggregatkörpers 14 ausgerichtet sind. Diese Werkzeugaufnahmen 16 sind in der Weise zueinander angeordnet, dass die Längsmittelachsen der jeweiligen Bearbeitungswerkzeuge 18 nicht parallel und in unterschiedliche Raumrichtungen weisend ausgerichtet sind.

Die abweichenden Winkel der Werkzeugaufnahmen 16 zur Längsachse 20 des Aggregatkörpers 14 können beliebig gewählt werden und im Bereich von größer +/-0° und kleiner +/-90°, beispielsweise in einem Winkel von +/-45°, zur Längsachse 20des Aggregatkörpers 14 liegen. Das in Figur 2 dargestellte Bearbeitungsaggregat 13 stellt nur eine beispielhafte Ausgestaltung mit sieben Werkzeugaufnahmen 16 und Bearbeitungswerkzeugen 18 dar. Das Bearbeitungsaggregat 13 kann ebenso weniger als sieben oder mehr als sieben Werkzeugaufnahmen 16 aufweisen, deren jeweilige Ausrichtung zur Längsachse 20 des Aggregatkörpers 14 beliebige Winkel aufweisen können.

An dem Aggregatkörper 14 ist eine Schwenkeinrichtung 21 vorgesehen, durch die eine Schwenkbewegung des Aggregatkörpers 14 relativ zur Anschlusseinrichtung 15 ermöglicht ist. Durch die Schwenkbewegung können die Bearbeitungswerkzeuge 18 zum Werkstück 11 positioniert werden. Die Schwenkeinrichtung 21 weist eine Schwenkachse auf, die axial zur Mittelachse der Anschlusseinrichtung 15, axial versetzt zur Mittelachse der Anschlusseinrichtung 15 oder in einen abweichenden Winkel zur Mittelachse der Anschlusseinrichtung 15 ausgerichtet sein kann. Durch die Schwenkbewegung ist insbesondere eine rotatorische Bewegung des Bearbeitungsaggregats 14 um die Z-Achse gebildet. Auf diese Weise kann durch die Stelleinrichtung in Verbindung mit der Schwenkeinrichtung 21 eine sechsachsige Stellbewegung des Bearbeitungsaggregats 14 ansteuerbar sein.

Im oder am Aggregatkörper 14 kann ein Antrieb vorgesehen sein, der die Schwenkbewegung des Aggregatkörpers 14 ansteuert. Der Antrieb kann pneumatisch oder elektromotorisch ausgebildet sein. Die Drehbewegung kann stufenlos oder in definierten Drehwinkeln vorgesehen sein. Die Schwenkeinrichtung 21 und/oder der Antrieb können eine Schnittstelle aufweisen, die mit einer Steuerung der Bearbeitungseinrichtung 10 verbunden ist, um die Stellbewegung des Bearbeitungsaggregats 13 zu steuern.

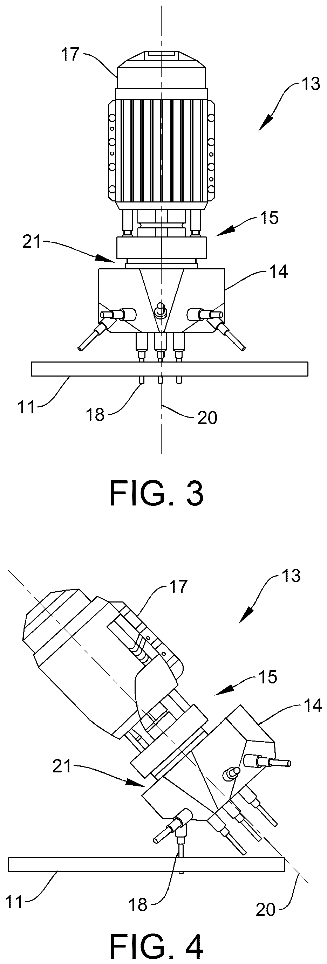

In den nachfolgenden Figuren 3 bis 10 sind exemplarisch verschiedene Bearbeitungsvorgänge mit dem zuvor beschriebenen Bearbeitungsaggregat 13 dargestellt. Die beschriebenen Ausrichtungen des Bearbeitungsaggregats 13 zum Werkstück 11 erfolgen durch eine entsprechende Ansteuerung der Stelleinrichtung und/oder der Schwenkeinrichtung 21.

Figur 3 zeigt einen vertikalen Bearbeitungsvorgang mit dem Bearbeitungsaggregat 13, wobei ein Bohrvorgang mit den drei axial zur Längsachse 20 des Aggregatkörpers 14 ausgerichteten Bearbeitungswerkzeugen 18 (Bohrwerkzeuge) in das Werkstück 11 ausgeführt wird. Durch diesen Bearbeitungsvorgang können gleichzeitig drei Bohrlöcher vertikal in das Werkstück 11 eingebracht werden.

Figur 4 zeigt einen alternativen vertikalen Bearbeitungsvorgang mit dem Bearbeitungsaggregat 13, bei welchem das Bearbeitungsaggregat 13 in einem Winkel, beispielsweise 45°, zum Werkstück 11 ausgerichtet ist. Dabei wird der Bohrvorgang durch eines der Bearbeitungswerkzeuge 18 (Bohrwerkzeuge) ausgeführt, das in dem abweichenden Winkel zur Längsachse 20 des Aggregatkörpers 14, beispielsweise 45°, ausgerichtet ist.

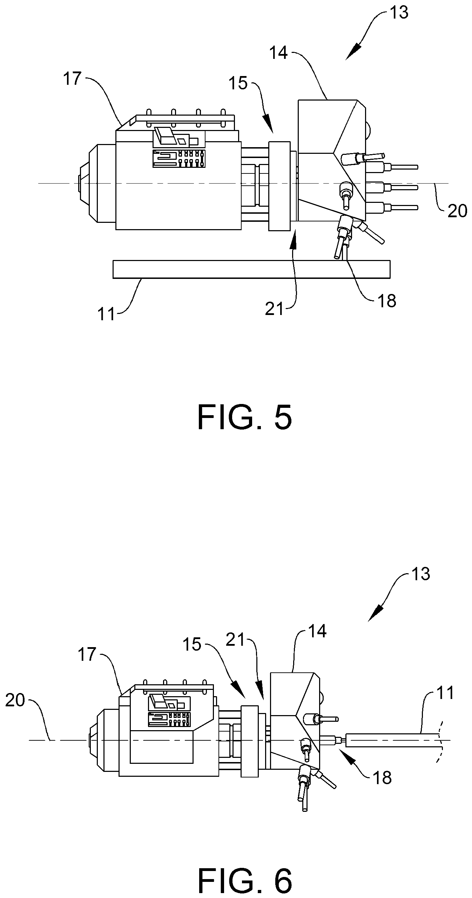

Figur 5 zeigt einen weiteren alternativen vertikalen Bearbeitungsvorgang mit dem Bearbeitungsaggregat 13, bei welchem das Bearbeitungsaggregat 13 parallel zum Werkstück 11 ausgerichtet ist. Dabei wird der Bohrvorgang durch eines der Bearbeitungswerkzeuge 18 (Bohrwerkzeuge) ausgeführt, das in einem rechten Winkel zur Längsachse 20 des Aggregatkörpers 14 ausgerichtet ist.

Figur 6 zeigt einen horizontalen Bearbeitungsvorgang mit dem Bearbeitungsaggregat 13 in einer Seitenansicht und Figur 7 in einer Ansicht von oben, wobei der Bearbeitungsvorgang mit den drei axial zur Längsachse 20 des Aggregatkörpers 14 angeordneten Bearbeitungswerkzeugen 18 (Bohrwerkzeuge) in das Werkstück 11 ausgeführt wird. Durch diesen Bearbeitungsvorgang können gleichzeitig drei Bohrlöcher horizontal in das Werkstück 11 eingebracht werden.

Figur 8 zeigt einen schrägen Bearbeitungsvorgang mit dem Bearbeitungsaggregat 13, bei welchem das Bearbeitungsaggregat 13 vertikal zum Werkstück 11 ausgerichtet ist und der Bearbeitungsvorgang durch eines der Bearbeitungswerkzeuge 18 (Bohrwerkzeuge) ausgeführt, das in dem abweichenden Winkel zur Längsachse 20 des Aggregatkörpers 14 ausgerichtet ist. Auf diese Weise kann ein Bohrloch in diesem abweichenden Winkel, beispielsweise 45°, in das Werkstück 11 eingebracht werden.

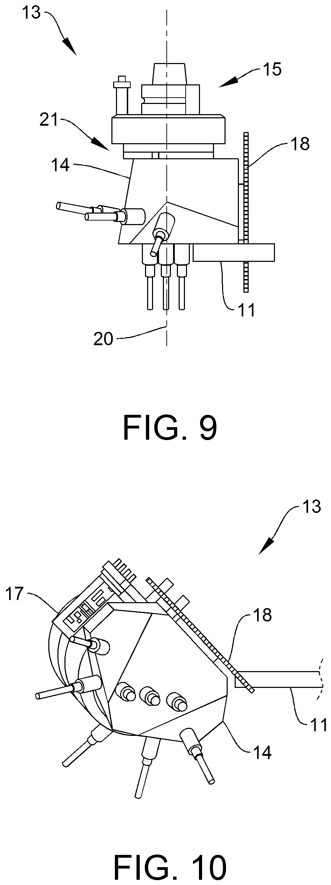

In den Figuren 9 und 10 ist ergänzend an einer der Werkzeugaufnahmen 16 ein Bearbeitungswerkzeug 18 vorgesehen, das als ein Sägewerkzeug ausgebildet ist. Durch eine entsprechende Ausrichtung des Bearbeitungsaggregats 14 zum Werkstück 11 kann mit dem Sägewerkzeug ein Sägevorgang oder Nutvorgang am Werkstück 11 ausgeführt werden. In Figur 9 sind das Bearbeitungsaggregat 13 und das Sägewerkzeug 18 vertikal zum Werkstück 11 ausgerichtet, sodass ein vertikaler Längsschnitt am Werkstück 11 ausführbar ist. In Figur 10 sind das Bearbeitungsaggregat 13 und das Sägewerkzeug 18 in einem Winkel zum Werkstück 11 angeordnet, sodass durch das Sägewerkzeug 18 ein schräger Sägeschnitt am Werkstück 11 ausgeführt werden kann. Durch eine entsprechende Ausrichtung des Bearbeitungsaggregats 13 zum Werkstück 11 können beliebige Sägewinkel eingestellt werden.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Bearbeitungsaggregat (13) für eine Bearbeitungseinrichtung (10), insbesondere eine Holzbearbeitungseinrichtung, aufweisend einen Aggregatkörper (14) mit mehreren Werkzeugaufnahmen (16), die jeweils ein Bearbeitungswerkzeug (18) zum Ausführen eines Bearbeitungsvorgangs an einem Werkstück (11) aufnehmen, sowie eine Anschlusseinrichtung (15), durch die der Aggregatkörper (14) an einer Antriebseinrichtung (17) oder einen korrespondierenden Anschluss der Bearbeitungseinrichtung (10) anordenbar ist, wobei der Aggregatkörper (14) eine Schwenkeinrichtung (21) aufweist, durch welche eine Schwenkbewegung zumindest der Werkzeugaufnahmen (16) um eine Schwenkachse relativ zur Anschlusseinrichtung (15) ausführbar ist, und ferner die Schwenkachse der Schwenkeinrichtung (21) in einem abweichenden Winkel zur Mittelachse der Anschlusseinrichtung (15) oder axial versetzt zur Mittelachse der Anschlusseinrichtung (15) ausgerichtet ist, **dadurch gekennzeichnet, dass** zumindest drei Werkzeugaufnahmen (16) vorgesehen sind, deren jeweiligen Längsmittelachsen nicht parallel zueinander ausgerichtet sind, wobei wenigstens eine der Werkzeugaufnahmen (16) mit der Längsmittelachse in einem Winkel von größer +/-0° und kleiner +/-90° zu einer Mittelachse der Anschlusseinrichtung (15) oder einer Schwenkachse des Aggregatkörpers (14) ausgerichtet ist und durch jede Werkzeugaufnahme (16) ein Bearbeitungsausgang in die jeweilige Raumrichtung gebildet ist.

2. Bearbeitungsaggregat nach Anspruch 1, bei dem ferner an dem Aggregatkörper (14) wenigstens vier Werkzeugaufnahmen (16), vorzugsweise fünf Werkzeugaufnahmen (16), vorgesehen sind, deren jeweiligen Längsmittelachsen nicht parallel zueinander ausgerichtet sind.

3. Bearbeitungsaggregat nach Anspruch 1 oder 2, bei dem ferner der Aggregatkörper (14) als ein vielflächiger Körper mit mehreren Außenflächen ausgebildet ist, wobei wenigstens drei Außenflächen in der Weise vorgesehen sind, dass deren Orthogonalen jeweils nicht parallel zueinander ausgerichtet sind und an jeder der drei Außenflächen zumindest eine der Werkzeugaufnahmen (16) vorgesehen ist.

4. Bearbeitungsaggregat nach einem der vorhergehenden Ansprüche, bei dem ferner wenigstens eine der Werkzeugaufnahmen (16) zur Aufnahme eines verschiedenen Bearbeitungswerkzeugs (18) ausgebildet ist, insbesondere zum Aufnehmen eines Bohrwerkzeugs, eines Sägewerkzeugs, eines Fräswerkzeugs, einer Messeinrichtung oder einer Abblasdüse.

5. Bearbeitungseinrichtung (10) zum Bearbeiten von Werkstücken (11), insbesondere Werkstücke (11), die zumindest teilweise aus Holz, einem Holzwerkstoff, Kunststoff, Verbundwerkstoff oder dergleichen ausgebildet sind, mit einer Werkstückauflage (12) zum Aufnehmen wenigstens eines zu bearbeitenden Werkstücks (11) sowie mit wenigstens einem Bearbeitungsaggregat (13) zum Ausführen eines Bearbeitungsvorgangs an einem zu bearbeitenden Werkstück (11), wobei das Bearbeitungsaggregat (13) relativ zum Werkstück (11) bewegbar angeordnet ist, **dadurch gekennzeichnet, dass** das Bearbeitungsaggregat (13) nach einem der Ansprüche 1 bis 4 ausgebildet ist.

6. Bearbeitungseinrichtung nach Anspruch 5, **dadurch gekennzeichnet, dass** das Bearbeitungsaggregat (13) an einer Stelleinrichtung angeordnet ist, durch die eine 5-achsige Stellbewegung des Bearbeitungsaggregats (13) vorgesehen ist.

## Claims

1. Machining unit (13) for a machining device (10), in particular a wood machining device, having a unit body (14) with several toolholders (16), each of which accommodates a machining tool (18) for performing a machining operation on a workpiece (11), and a connecting device (15) by means of which the unit body (14) can be arranged on a drive device (17) or a corresponding connection of the machining device (10), wherein the unit body (14) has a swivel device (21) by means of which a swivel movement of at least the toolholders (16) can be carried out around a swivel axis relative to the connecting device (15), and furthermore the swivel axis of the swivel device (21) is aligned at a different angle to the central axis of the connecting device (15) or is axially offset to the central axis of the connecting device (15), **characterised in that** at least three toolholders(16) are provided, the respective longitudinal central axes of which are not aligned parallel to each other, wherein at least one of the toolholders (16) is aligned with its longitudinal central axis at an angle of greater than +/-0 ° and less than +/-90 ° to a central axis of the connecting device (15) or a swivel axis of the unit body (14), and each toolholder (16) forms a machining output in the respective spatial direction.

2. Machining unit according to claim 1, wherein furthermore at least four toolholders (16), preferably five toolholders (16), are provided on the unit body (14), the respective longitudinal central axes of which are not aligned parallel to each other.

3. Machining unit according to claim 1 or 2, wherein furthermore the unit body (14) is formed as a multifaceted body with several outer surfaces, wherein at least three outer surfaces are provided in such a way that their orthogonals are not aligned parallel to each other, and at least one of the toolholders (16) is provided on each of the three outer surfaces.

4. Machining unit according to one of the preceding claims, wherein furthermore at least one of the toolholders (16) is designed to accommodate a different machining tool (18), in particular to accommodate a drilling tool, a sawing tool, a milling tool, a measuring device or a blowoff nozzle.

5. Machining device (10) for machining workpieces (11), in particular workpieces (11) which are at least partly made of wood, a wood-based material, plastic, composite material or the like, with a workpiece support (12) for holding at least one workpiece to be machined (11) and with at least one machining unit (13) for carrying out a machining operation on a workpiece to be machined (11), wherein the machining unit (13) is arranged moveably relative to the workpiece (11), **characterised in that** the machining unit (13) is designed according to one of the claims 1 to 4.

6. Machining device according to claim 5, **characterised in that** the machining unit (13) is arranged on a positioning device which provides a 5-axis positioning movement of the machining unit (13).

## Revendications

1. Groupe d'usinage (13) pour un dispositif d'usinage (10), en particulier un dispositif d'usinage du bois, présentant un corps de groupe (14) comprenant plusieurs logements d'outil (16), qui logent respectivement un outil d'usinage (18) pour l'exécution d'une opération d'usinage sur une pièce (11), ainsi que un dispositif de raccordement (15), par lequel le corps de groupe (14) est apte à être agencé sur un dispositif d'entraînement (17) ou un raccordement correspondant du dispositif d'usinage (10), dans lequel le corps de groupe (14) présente un dispositif de pivotement (21), par lequel un mouvement de pivotement au moins des logements d'outil (16) peut être exécuté autour d'un axe de pivotement par rapport au dispositif de raccordement (15), et en outre l'axe de pivotement du dispositif de pivotement (21) est orienté selon un angle déviant de l'axe médian du dispositif de raccordement (15) ou est décalé axialement de l'axe médian du dispositif de raccordement (15), **caractérisé en ce que** au moins trois logements d'outil (16) sont prévus, dont les axes médians longitudinaux respectifs sont orientés de façon à être non parallèles les uns aux autres, dans lequel au moins un des logements d'outil (16) est orienté avec l'axe médian longitudinal selon un angle supérieur à +/-0° et inférieur à +/-90° par rapport à un axe médian du dispositif de raccordement (15) ou à un axe de pivotement du corps de groupe (14) et, au moyen de chaque logement d'outil (16), une sortie d'usinage est formée dans la direction spatiale respective.

2. Groupe d'usinage selon la revendication 1, au sein duquel en outre au moins quatre logements d'outil (16), de préférence cinq logements d'outil (16), sont prévus sur le corps de groupe (14), dont les axes médians longitudinaux respectifs sont orientés non parallèles les uns aux autres.

3. Groupe d'usinage selon la revendication 1 ou la revendication 2, au sein duquel en outre le corps de groupe (14) est réalisé en tant que corps polyédrique avec plusieurs surfaces extérieures, dans lequel au moins trois surfaces extérieures sont prévues de telle manière que leurs orthogonales sont orientées respectivement non parallèles les unes aux autres et au niveau de chacune des trois surfaces extérieures au moins un des logements d'outil (16) est prévu.

4. Groupe d'usinage selon l'une quelconque des revendications précédentes, au sein duquel en outre au moins un des logements d'outil (16) est réalisé pour le logement d'un outil d'usinage (18) différent, en particulier pour le logement d'un outil de fond, d'un outil de scie, d'un outil de fraise, d'un dispositif de mesure ou d'une buse de soufflage.

5. Dispositif d'usinage (10) pour usiner des pièces (11), en particulier des pièces (11) qui sont au moins partiellement réalisées en bois, en un matériau à base de bois, en plastique, en matériau composite ou similaires, comprenant un support de pièce (12) pour recevoir au moins une pièce (11) à usiner ainsi qu'au moins un groupe d'usinage (13) pour l'exécution d'une opération d'usinage sur une pièce (11) à usiner, le groupe d'usinage (13) étant agencé de façon mobile par rapport à la pièce (11), **caractérisé en ce que** le groupe d'usinage (13) est réalisé selon l'une des revendications 1 à 4.

6. Dispositif d'usinage selon la revendication 5, **caractérisé en ce que** le groupe d'usinage (13) est agencé sur un dispositif de réglage, par lequel est prévu un mouvement de réglage à 5 axes du groupe d'usinage (13).
